# EUROPEAN PATENT APPLICATION

(11) **EP 0 800 127 A1**
(43) Date of publication of application: **08.10.1997**
(21) Application number: 96933607.2
(22) Date of filing: 09.10.1996
(51) Int. Cl.: G05B 19/05, G05B 19/18, G06F 9/06

(54) **METHOD OF EDITING SEQUENCE DATA**

(30) Priority: 09.10.1995 JP 261112/95
(71) Applicant: FANUC LTD, Minamitsuru-gun, Yamanashi 401-05 (JP)
(72) Inventor: ONISHI, Yasushi, Fujiyoshida-shi, Yamanashi 403 (JP); WATANABE, Toru, Minamituru-gun, Yamanashi 401-05 (JP)
(74) Representative: Billington, Lawrence Emlyn
(86) International application number: JP9602938
(87) International publication number: WO9714082

(57) **Abstract**

When means (1b) is made to give a protection removal command by operating a keyboard (1g), protection control means (1c) removes a protection on receiving the command, and counts the time elapsed from the start of the removal of the protection. While the protection is off, editing means (1d) is allowed to edit the sequence data (1a) by operating the keyboard (1g) or the like, and transfer means (1e) transfers the edited data to a PC (2). Data rewriting means (2b) rewrites a corresponding portion of sequence data (2d) in accordance with the transferred sequence data (1a). On the other hand, the protection control means (1c) on the side of a programming apparatus (1) re-establishes a protection when a counted value of the time elapsed from the removal of the protection is equal to or more than the predetermined time period.

## Description

### Technical Field

The present invention relates to a sequence data editing system for editing a sequence program in a programmable controller and the states of signals therein, more particularly, to a sequence data editing system applicable to the cases such as rewriting of protected sequence data and the like.

### Background Art

Conventionally, a programmable controller (hereinafter referred to as PC) is designed so that a sequence program for operation is originated by means of an on-line-connected programming apparatus, and PC-side operation is ensured by delivering the originated sequence program from the programming apparatus. Also during operation of the PC, the sequence program and the states of signals can be displayed for monitoring and, if necessary, rewritten on the side of the programming apparatus. However, when the PC is in operation, sequence data, such as ladders, signals, etc., must be rewritten cautiously, taking into account the possible reactions of the PC resulting from such rewriting, since careless rewriting of the sequence data may cause an accident due to erroneous operation.

Therefore, the conventional programming apparatus is designed so that an operation for establishing a protection can be performed through its screen. Thus, while the sequence data are being displayed on a monitor, the protection is established so that rewriting of the data is prohibited. The protection is removed when the sequence data has to be rewritten.

With the conventional protecting function, however, the protection must be re-established after rewriting operation. Thus, where the rewriting operation has to be performed frequently, the protection has to be established after each rewriting, which is cumbersome and may possibly be omitted due to overlooking.

### Disclosure of the Invention

The object of the present invention is to provide a sequence data editing system for editing on-line a sequence program and the states of signals, which can reconcile the protecting function and operating efficiency.

In order to achieve the above object, a sequence data editing system according to the present invention comprises: editing means for editing sequence data; data rewriting means for rewriting the sequence data according to the edition by said editing means; and protecting means designed to prohibit sequence data editing operation by means of said editing means unless a protection removal command is given, to allow the sequence data editing operation by said editing means when the protection removal command is given externally, and to automatically restore the state in which the editing operation is prohibited when the sequence data editing operation by said editing means has not been carried out for a predetermined time period after the protection removal command is given externally.

In the sequence data editing system according to the present invention arranged in this manner, when the sequence data protection removal command is given, the time elapsed from the start of the removal is counted. When the editing operation is carried out, the time elapsed from the start of the editing operation is counted again. When the resulting count value is equal to or larger than the predetermined time, a protection is re-established automatically. Thus, an operator need not carry out any operation for re-establishment, so that the operating efficiency is improved, and there is no possibility of erroneous operation.

### Brief Description of the Drawings

FIG. 1 is a conceptual diagram illustrating functions of the present invention;
FIG. 2 is a general block diagram of the hardware of a CNC (numerical control device) incorporating a programmable controller according to one embodiment of the present invention;
FIG. 3 is a block diagram of the hardware of an automatic programming apparatus;
FIG. 4 shows an example of a sequence data editing process on a display screen of a display device;
FIG. 5 is a flowchart showing a procedure to be executed on the side of the automatic programming apparatus for editing operation; and
FIG. 6 is a block diagram showing the hardware of a programmable controller according to another embodiment of the present invention, not incorporated into a CNC.

### Best Mode for Carrying Out the Invention

An embodiment of the present invention will now be described with reference to the drawings.

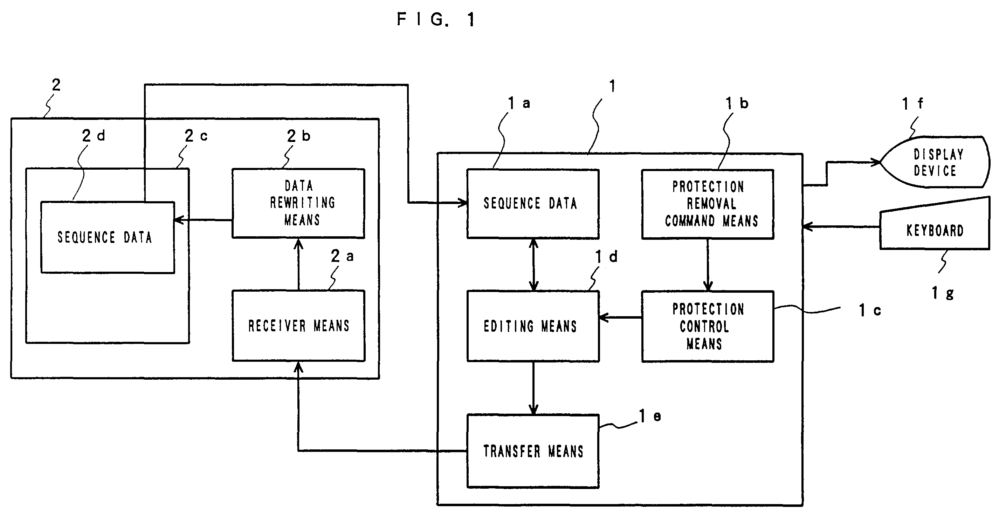

Referring first to the conceptual diagram of FIG. 1, functions of the present invention will be described.

When protection removal command means 1b gives a protection removal command for sequence data 1a, which has been read from a PC (programmable controller) 2 on line on the side of a programming apparatus 1 in response to operation on a display device 1f, keyboard 1g, etc., protection control means 1c removes a protection on receiving the command, and counts the time elapsed from the start of the removal of the protection. When the protection is off, editing means 1d performs editing operation for the sequence data 1a based on the operation on the display device 1f, keyboard 1g, etc.

When transfer means 1e transfers the edited sequence data 1a to the PC 2, receiver means 2a on the side of the PC receives the transferred sequence data 1a, and data rewriting means 2b rewrites a corresponding portion of sequence data 2d in sequence data storage means 2c in accordance with the received sequence data 1a.

On the other hand, the protection control means 1c on the side of the programming apparatus 1 re-establishes a protection when a count value of the time period from the removal of the protection is equal to or longer than a predetermined time period. Thereupon, the protection is set automatically.

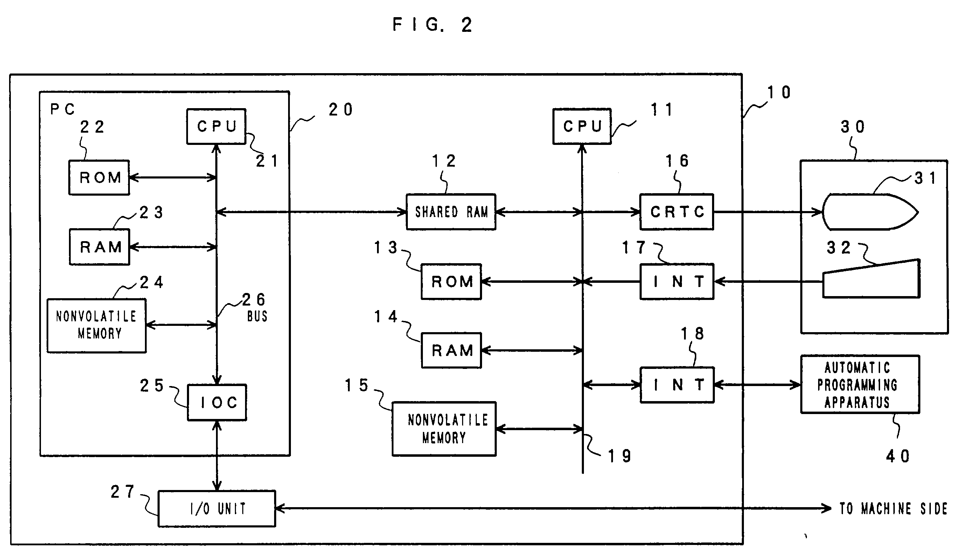

Referring now to the block diagram of FIG. 2, the whole of the hardware constituting a CNC (numerical control device) according to the present embodiment will be described.

A processor 11, which is a processor that takes a leading role in the general control of the CNC 10, reads a system program stored in a ROM 13, and executes the general control of the CNC 10 in accordance with this system program.

The CNC 10 incorporates a PC. A shared RAM 12 is a RAM through which data is transferred between the CNC 10 and the PC 20. Also, the RAM 12 is stored with data necessary for access from both sides.

A RAM 14 is stored with temporary computation data, display data, etc. A nonvolatile memory 15 is formed of a CMOS backed up by a battery or flash ROM, and is stored with a tool correction value, pitch error correction value, machining program, and parameters. Also, the nonvolatile memory 15 is stored with parameters required on the side of the PC 20.

A graphic control circuit 16 converts digital data, such as the respective current positions of axes, alarms, parameters, image data, etc., into image signals, and outputs them. These image signals are fed to a display device 31 of a CRT/MDI unit 30, and displayed on the display device 31. The display device 31 can also display the parameters, ladder diagrams, etc. on the side of the PC 20. These data are fed from the PC 20 via the shared RAM 12.

An interface 17 receives data from a keyboard 32 in the CRT/MDI unit 30, and delivers them to the processor 11. Data to be delivered to the PC 20 can be also inputted through the keyboard 32, and these data are fed to the PC 20 via the shared RAM 12.

An automatic programming apparatus 40 is connected to an interface 18. A sequence program originated by means of the automatic programming apparatus 40 is read and delivered to the PC 20 through the interface 18, and loaded into a nonvolatile memory 24. Sequence data, such as the sequence program in the nonvolatile memory 24, the states of internal signals of a RAM 23, etc., are edited by the automatic programming apparatus 40, according to the procedure described later, and the sequence data in the nonvolatile memory 24 and the RAM 23 are rewritten in accordance with the edited data.

The interface 18 is connected with external apparatuses (not shown), such as a paper tape reader, paper tape puncher, paper tape reader/puncher, printer, etc., besides the automatic programming apparatus 40. The machining program is read from the paper tape reader. Further, the machining program edited in the CNC 10 can be delivered to the paper tape puncher.

The processor 11 is coupled to the shared RAM 12, ROM 13, and other components through a bus 19. An axis control circuit for controlling servomotors, servo amplifiers, spindle control circuit, spindle amplifier, manual pulse generator interface, etc. are not shown in the drawings.

The PC 20 includes a processor 21 for PC. The processor 21 is connected to the shared RAM 12 by means of a bus 26, and the shared RAM 12 is coupled to the bus 19 of the CNC 10. Also, a ROM 22 is coupled to the bus 26. This ROM 22 is stored with a management program for controlling the PC 20.

The RAM 23 is stored with input and output signals, and its contents are rewritten as the sequence program is executed. The nonvolatile memory 24 is formed of a CMOS backed up by a battery or flash ROM, and is stored with the sequence program originated in the automatic programming apparatus 40. The sequence program, is generally originated in a ladder language, but it may be prepared in a high-level language such as PASCAL in some cases. This sequence program stored in the nonvolatile memory 24 is transferred to the RAM 23 during operation, and the processor 21 reads and executes the program from the RAM 23. Also, the sequence program can be displayed on the display device 31. The nonvolatile memory 24 is stored with data that are required to be retained after the power supply is cut off, as well as with the sequence program.

An I/O control circuit 25, which is connected to the bus 26, converts an output signal stored in the RAM 23 into a serial signal, and delivers it to an I/O unit 27. Also, the circuit 25 converts a serial input signal from the I/O unit 27 into a parallel signal, and delivers it to the bus 26. The delivered signal is loaded into the RAM 23 by the processor 21. The input and output signals stored in the RAM 23 and the data stored in the nonvolatile memory 24 can be displayed on the display device 31 of the CRT/MDI unit 30.

The processor 21 receives command signals, such as an M-function command, T-function command, etc., through the shared RAM 12, temporarily loads them into the ROM 22, processes such commands in accordance with sequence program stored in the ROM 22, and delivers them to the I/O unit 27 via the I/O control circuit (IOC) 25. A hydraulic apparatus, pneumatic apparatus, electromagnetic apparatus, etc. on the machine side are controlled in accordance with these output signals.

Further, the processor 21 receives input signals, such as machine-side limit switch signals from the I/O unit 27, operation switch signals from a machine control panel, etc., and temporarily loads them into the RAM 23. Those input signals which need not be processed by means of the PC 20 are fed to the processor 11 via the shared RAM 12. Other signals are processed according to the sequence program. Some of the processed signals are delivered to the CNC side, while others are delivered as output signals from the I/O unit 27 to the machine side via the I/O control circuit 25.

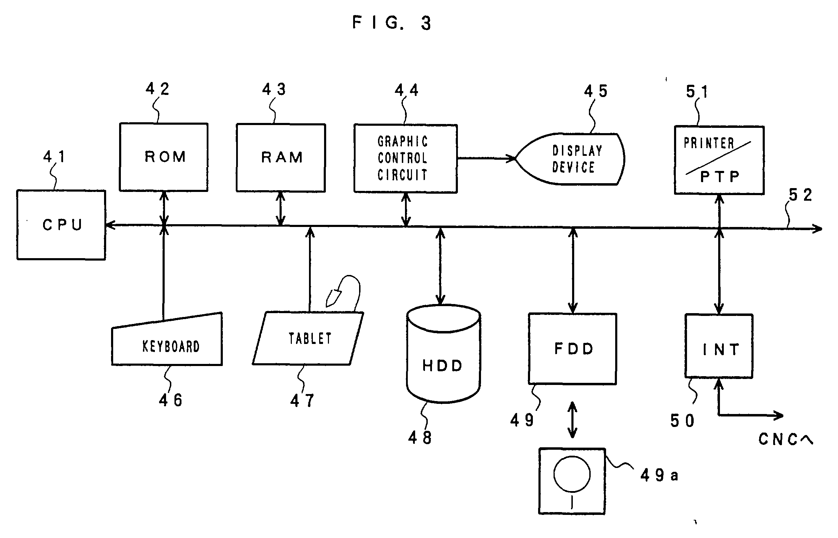

Referring now to the block diagram of FIG. 3, the hardware configuration of the automatic programming apparatus 40 will be described.

A processor 41 controls the whole automatic programming apparatus 40 in accordance with a system program stored in a ROM 42. A RAM 43 is stored with a sequence program to be executed in the PC 20 and the current states of internal signals.

A graphic control circuit 44 converts display data from the processor 41 into display signals, and delivers them to a display device 45. The display device 45 displays a corresponding data in response to these display signals. A CRT or liquid crystal display device is used as the display device 45.

A keyboard 46 is provided with operation keys, function keys, etc. that are used for the input of data. The data may also be inputted by means of a tablet 47, mouse (not shown), etc.

An HDD (hard disk drive) 48 is stored with data, such as the originated sequence program, that are expected to be retained after the power supply is cut off. An FDD (floppy disk drive) 49 can drive a floppy disk 49a to read the sequence program and the like and load the originated or edited sequence program into the floppy disk 49a.

The originated sequence program can also be delivered to a printer/PTP (paper tape puncher) 51.

Sequence data, such as the sequence program stored in the nonvolatile memory 24 of the PC 20, the current states of the internal signals and input and output signals stored in the RAM 23, etc., are read through an interface (INT) 50, and are loaded into the RAM 43 and the like. Also, the sequence data edited by the automatic programming apparatus 40 are delivered through the interface 50 to the PC 20.

These components are coupled to one another by means of a bus 52.

The following is a description of the procedure of editing on a screen of the display device 45 of the automatic programming apparatus 40.

When a sequence data editing command is inputted, the processor 41 of the automatic programming apparatus 40 reads the sequence program stored in the nonvolatile memory 24, the states of the internal signals and input and output signals stored in the RAM 23, etc., and loads them into the RAM 43.

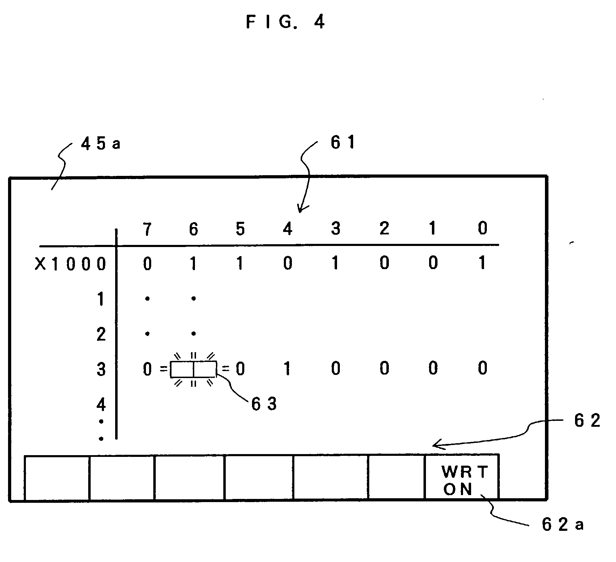

Referring now to FIG. 4, an example of a sequence data editing procedure on the display screen of the display device 45 will be described.

The states of the internal signals of the PC 20 are displayed as sequence data 61 on a display screen 45a. Displayed under the sequence data 61 are menu display columns 62 that can be selected by means of the function keys. In an initial state of this editing picture, the data are protected from rewriting.

With such an editing picture, an operator first selects "WRT ON" from a menu 62a, one of the menu display columns 62 to remove the protection. Thereupon, the display of the menu 62a turns to "WRT OFF". Further, a cursor 63 on the display screen 45a turns red, for example, and flickers. This indicates that the signal states are allowed to be rewritten. At the same time, a timer in the automatic programming apparatus 40 starts measuring.

The operator moves the cursor 63 to the position of a signal to be rewritten, and depresses, for example, a return key on the keyboard 46. By doing so, the state of the signal on which the cursor 63 is currently placed is reversed. More specifically, the state 1 changes into 0, or 0 into 1.

The changed data is immediately delivered to the PC 20 through the interface 50, whereupon it is rewritten. If there are any other data to be rewritten, thereafter, data on the side of the PC 20 can be rewritten at once by moving the cursor 63 in like manner and depressing the return key. At this point of time, the count of timer is reset to restart the counting.

When a predetermined time has elapsed from the start of the timer counting, the data are automatically protected from rewriting, and the display of the menu 62a turns to "WRT ON". Further, the flickering in red of the cursor 63 is restored to normal indication.

Furthermore, the operator can voluntarily establish the protection after the rewriting operation by changing the menu 62a into "WRT ON" by key operation.

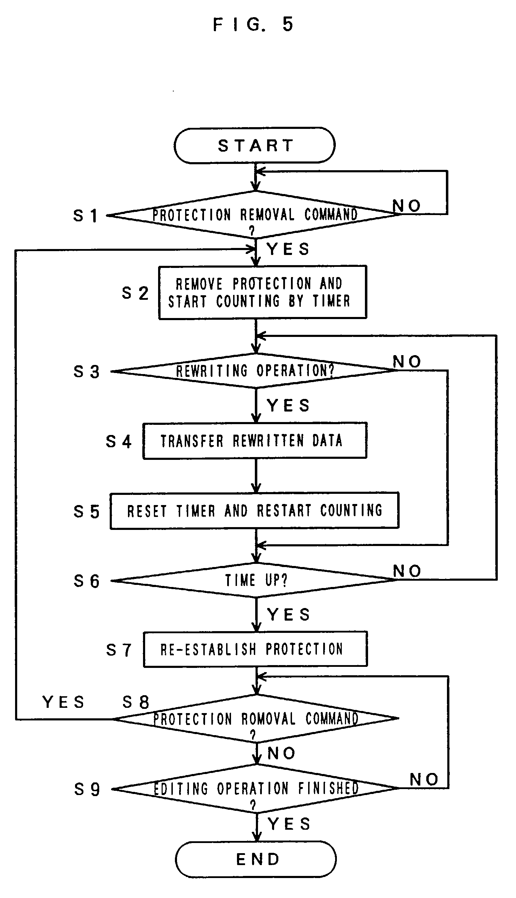

Referring now to the flowchart of FIG. 5, a procedure on the side of the automatic programming apparatus 40 for executing the editing operation will be described.

It is determined by the operator's operation whether or not a command for the removal of a protection is given (Step S1), and if not, this process of Step S1 is repeated. If the protection removal command is given, the counting by timer is started when the protection is removed internally (Step S2).

Subsequently, it is determined whether or not the rewriting operation is performed on the editing picture (Step S3), and if not, the program advances to Step S6. If the rewriting operation is performed, rewritten data are transferred to the side of the PC 20 (Step S4), the count of timer is reset to 0, and counting is started again (Step S5).

Then, it is determined whether or not the timer count is up (Step S6), and, if not, the program returns to Step S3. If the time is up, a protection is re-established automatically (Step S7).

It is determined whether or not a protection removal command is given again (Step S8), and if the removal command is given, the program returns to Step S2. If the removal command is not given, it is then determined whether or not an editing operation end command is given (Step S9). If the end command is given, the processes of this flowchart are finished, and, if not, the program returns to Step S8.

Thus, according to the present embodiment, a protection is automatically re-established after the passage of a predetermined time period from the removal of the protection or from the editing operation. Therefore, the operator need not carry out the re-establishing operation, so that the operating efficiency is improved, and there is no possibility of erroneous operation.

Although an example of rewriting the states of the internal signals is discussed in the case of the present embodiment, a ladder program can also be rewritten according to this embodiment.

In the embodiment described above, the automatic programming apparatus is connected to the numerical control device, the sequence data are read from the programmable controller contained in the numerical control device by means of the automatic programming apparatus, the read data are temporarily stored in the RAM of the automatic programming apparatus, and the stored data are edited. However, the present invention is not limited to this example, and so the sequence data of the programmable controller included in the numerical control device may be changed directly through a manual data input device with display (CRT/MDI) that is connected to the numerical control device.

In such a case, it is necessary only that the processing shown in FIG. 5 is executed by the CPU 11 shown in FIG. 2; the data shown in FIG. 4 is displayed on the display device 31; and operations for the change of the sequence data and the establishment or removal of the protection is executed through the keyboard 32.

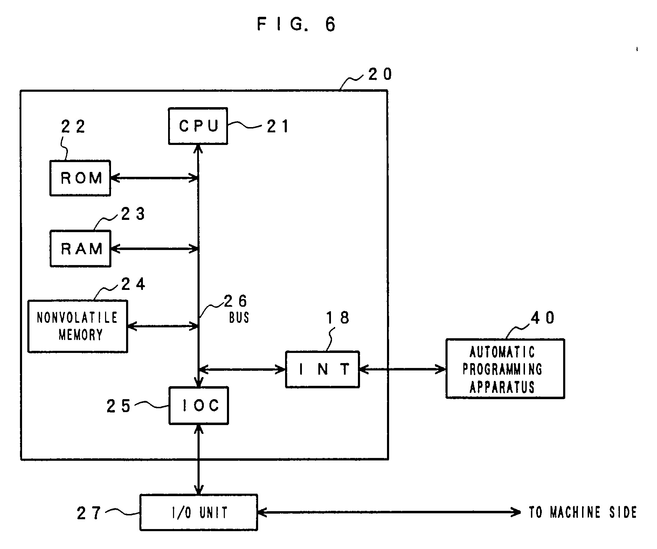

Furthermore, according to the embodiment described in the foregoing, the sequence data are edited in the programmable controller that is incorporated into the numerical control device. However, the present invention is not limited to this example, and is also applicable to a programmable controller that is not incorporated into the numerical control device. Naturally, in such a case, the system has to be arranged as shown in FIG. 6 so that a process for rewriting the sequence data to be executed by the interface 18, one of the processes to be executed by the CPU 11 shown in FIG. 2, is executed by the CPU 11 shown in FIG. 6.

## Claims

1. A sequence data editing system comprising:
editing means for editing sequence data;
data rewriting means for rewriting the sequence data according to the edition by said editing means; and
protecting means designed to prohibit sequence data editing operation by means of said editing means unless a protection removal command is given, to allow the sequence data editing operation by said editing means when the protection removal command is given externally, and to automatically restore the state in which the editing operation is prohibited when the sequence data editing operation by said editing means has not been carried out for a predetermined time period after the protection removal command is given externally.

2. A sequence data editing system according to claim 1, wherein said data rewriting means is provided on the side of a programmable controller, said editing means and protecting means are provided on the side of an automatic programming apparatus connected to the programmable controller through an interface, and the sequence data to be edited and rewritten are data on the programmable controller.

3. A sequence data editing system according to claim 1, wherein said data rewriting means is provided on the side of a numerical control device, said editing means and protecting means are provided on the side of an automatic programming apparatus connected to the numerical control device through an interface, and the sequence data to be edited and rewritten are data of a programmable controller incorporated into the numerical control device.

4. A sequence data editing system according to claim 1, wherein said data rewriting means is provided on the side of a numerical control device, said editing means is a manual input unit mounted to the numerical control device, and the sequence data to be edited by the editing means are the data of a programmable controller incorporated into the numerical control device.

5. A sequence data editing system according to claim 1, wherein said protecting means has a function to automatically restore the state in which the editing operation is prohibited when a protection command is given externally before the passage of the predetermined time.
